# EUROPEAN PATENT APPLICATION

(11) **EP 2 221 758 A1**
(43) Date of publication of application: **25.08.2010**
(21) Application number: 09176438.1
(22) Date of filing: 19.11.2009
(51) Int. Cl.: G06Q 10/00

(54) **Inventory survey system using radio frequency**

(30) Priority: 11.02.2009 BR 09019774
(71) Applicant: Dabi Atlante Indústrias Médico Odontológicas LTDA., 14095903 Ribeirão Preto (BR)
(72) Inventor: Biagi, Caetano Barros, 14024250, Ribeirao Preto (BR)
(74) Representative: Stöckeler, Ferdinand

(57) **Abstract**

The present application relates to an inventory survey using radio frequency, where the monitoring procedure is carried out automatically by means of a movement self-monitoring of the inventory in cabinet (1), the data sent to the central will allow the required actions to be taken for controlling and managing the inventory in an effective and traceable manner.

## Description

The present invention relates to an inventory survey system using radio frequency.

### DESCRIPTION OF THE PRIOR ART

Medical companies currently face some problems regarding the logistics of their health products, mainly concerning inventories replenishment, due to the great difficulty in anticipating the demand and since these products are available in a number of models. In most cases, they are only selected upon use. In an attempt to solve or minimize these problems, companies usually use two supply methods:
First: products stocked at the consumption site under consignation, that is, the consumer only pays for what is used. This model does not assure the product will be available upon use unless inventory is periodically followed-up and replenished;
Second: concentration of inventories in strategic locations in areas with higher demand and delivery using fast transportation means;

In both supply methods mentioned above, the cost for issuing bills of sale, carriers payment, inventories maintenance, etc. is regarded high.

### PURPOSE OF THE PRESENT INVENTION

The present invention relates to an inventory survey system using radio frequency comprising a cabinet provided with shelves where the products are arranged. Antennas are placed inside said cabinet for activating tags attached to the products, as well as a module comprising: circuit board, multiplex and RFID reader.

The antennas generate information referring to the quantity and other inventory information, the multiplex captures the information generated by the antennas and the RFID reader interprets the readings and sends them to the hardware.

The cabinet has a predetermined setting comprising: product range (model, quantity, safety inventory and replenishment level), reading periodicity of the cabinet contents and periodicity of information transmission via internet.

Subsequently, the cabinet starts operating autonomously and sends a report with the information obtained from the readings to a predetermined central; the report is then interpreted by the company's operating system and, if required, the replenishment procedure is started.

### BRIEF DESCRIPTION OF THE DRAWINGS

The present invention will be now described more concisely based on an execution example represented in the drawings. The figures show:
Figure 1 - a flow chart detailing the system, object of the present invention.

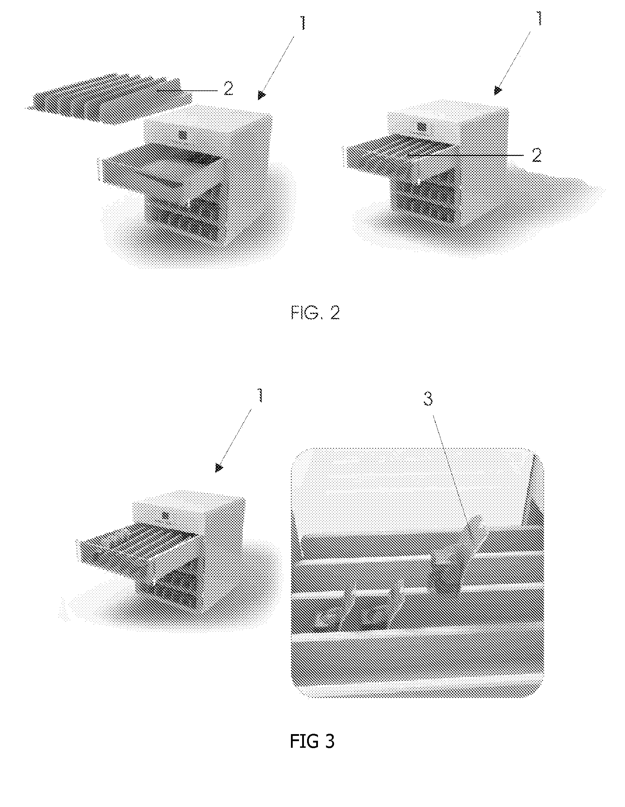

Figure 2 - a first view of the cabinet that is part of the system, object of the present invention.
Figure 3 - a second view of the cabinet that is part of the system, object of the present invention.

### DETAILED DESCRIPTION OF THE INVENTION

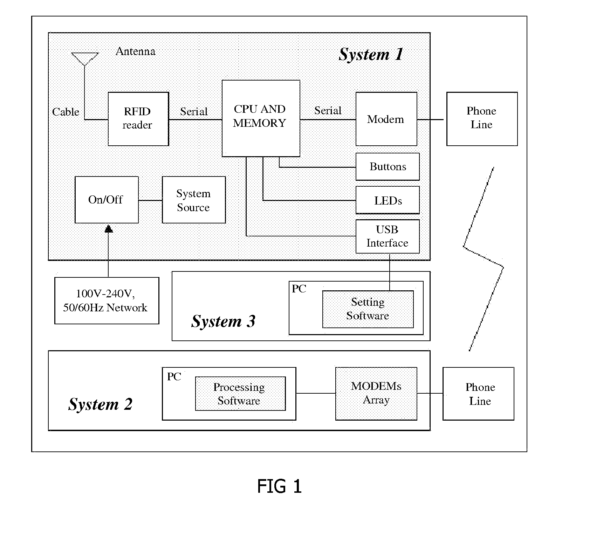

An inventory survey system using radio frequency can be seen in Figure 1.

The system has essentially the following main elements, that is: a cabinet 1 provided with shelves 2, where the products 3 are arranged.

Antennas are placed inside the cabinet 1 for activating tags attached to the products 3 and a module comprising: circuit board (hardware), multiplex and reader.

The antennas generate information referring to the quantity and additional information on the inventory, the multiplex captures the information generated by the antennas, and the RFID reader interprets the readings and sends them to the hardware.

The RFID (Radio-Frequency Identification) communication technology is used for monitoring and controlling the inventory of products 3. It was created from the use of a preexisting technology employed in some commercial means. The novelty relies on the control method, since no similar application is currently available.

The association of the RFID technology with a specific communication means, combined with a cabinet provided with the appropriate safety means, results in a safe and reliable source regarding product input and output, not only physically, but also its remote control.

Its operation principle relies on the provision of a cabinet 1 having a predetermined setting comprising: product range 3 (model, quantity, safety inventory and replenishment level), reading periodicity of the cabinet 1 contents and periodicity of information transmission via internet.

After determining the setting, the cabinet 1 starts operating autonomously and sends a report with the information obtained from the readings to a predetermined central. The report is then interpreted by the company's operating system and, if required, the replenishment procedure is started.

This procedure is carried out automatically, wherein, by using a movement self-monitoring of the inventory in cabinet 1, the data sent to the central will allow the required actions to be taken for controlling and managing the inventory in an effective and traceable manner.

It will be obviously appreciated that, while the above was mentioned as an illustrative example of the present invention, all other modifications and variants to this invention, as it would be apparent to those skilled in the art, are regarded as being within the wide scope and ambit of the present invention as per the claims below.

## Claims

1. **"INVENTORY SURVEY SYSTEM USING RADIO FREQUENCY" characterized in that** it comprises a cabinet (1) provided with shelves (2) where products (3) are arranged; antennas are placed inside cabinet (1) for activating tags attached to the products (3) and a module comprising: circuit board, multiplex and RFID reader;
- the antennas generate information referring to the quantity and other inventory information, the multiplex captures the information generated by the antennas and the RFID reader interprets the readings and sends them to the hardware;
- the cabinet (1) has a predetermined setting comprising: product range (3) (model, quantity, safety inventory and replenishment level), cabinet contents reading periodicity (1) and information transmission periodicity via internet;
- subsequently, the cabinet 1 starts operating autonomously and sends a report with the information obtained from the readings to a predetermined central; the report is then interpreted by the company's operating system and, if required, the replenishment procedure is started.

2. **"INVENTORY SURVEY SYSTEM USING RADIO FREQUENCY"** according to claim 1, **characterized in that** the
RFID (Radio-Frequency Identification) communication technology is used for monitoring and controlling the inventory of products (3).

3. **"INVENTORY SURVEY SYSTEM USING RADIO FREQUENCY"** according to claim 2, **characterized in that** the monitoring procedure is carried out automatically, wherein, by using a movement self-monitoring of the inventory in cabinet (1), the data sent to the central will allow the required actions to be taken for controlling and managing the inventory in an effective and traceable manner.
